# EUROPEAN PATENT SPECIFICATION

(11) **EP 3 433 799 B1**
(45) Date of publication and mention of the grant of the patent: **08.09.2021**
(21) Application number: 17714075.3
(22) Date of filing: 13.03.2017
(51) Int. Cl.: G06K 19/077, B07C 5/34

(54) **RADIO FREQUENCY IDENTIFICATION TAG APPLICATION AND ENCODING DEVICE**
ANWENDUNG FUER FUNKFREQUENZIDENTIFIKATIONS-ETIKETT UND CODIERVORRICHTUNG
APPLICATION D'ETIQUETTES D'IDENTIFICATION A FREQUENCE RADIO ET DISPOSITIF DE CODAGE

(30) Priority: 23.03.2016 US 201662312238 P
(43) Date of publication of application: 30.01.2019
(73) Proprietor: Promega Corporation, Madison, WI 53711-5399 (US)
(72) Inventor: PHILLIPS, Travis, Stoughton, Wisconsin 53589 (US); GEORGE, Brian, McFarland, WI 53558 (US); DACHNIWSKYJ, Nicholas Roman, Madison, Wisconsin 53713 (US); SEHMER, Mark, Stoughton, Wisconsin 53589 (US)
(74) Representative: Potter Clarkson
(86) International application number: PCT/US2017/022084
(87) International publication number: WO 2017/165143

(56) References cited:
- EP-A1- 2 068 268
- WO-A2-2006/029105
- US-A1- 2004 027 180
- US-A1- 2005 247 399
- US-A1- 2007 043 469
- US-A1- 2007 075 141
- US-A1- 2008 012 687

## Description

### BACKGROUND

In general, the present disclosure relates to methods and systems that employ radio frequency identification (RFID) techniques.

The identification industry has undergone many changes over the past few years, especially with respect to the use of transponders to track and identify items. By replacing handwritten labels, RFID systems employ RFID tags, which are applied to objects such as vials. The RFID tags can be encoded with information relating to the vial such as vial contents and other information. Each RFID tag can be individually and manually scanned to procure the information stored on the RFID tag, for example, when the RFID tag is taken out of a storage apparatus.

Typically, a log of the contents of the vials in the storage apparatus is maintained. However, since the storage apparatus can hold a large number of vials (e.g., approximately 20,000 1-2 mL vials), tracking vial inventory can be difficult.

One conventional way to track inventory employs attaching or connecting an RFID tag to each stored vial. The vials are placed in or removed from the storage apparatus. However, the tags on the vials must be individually and manually read (e.g., scanned) with an RFID reader, which is held by an operator (e.g., a scientist, technician, etc.), to electronically identify the vials outside of the storage device. Before the vials are added to the storage apparatus, a given RFID vial tag is individually read, and the inventory list associated with the storage apparatus is updated or initially generated by adding vial information to the list. Similarly, after vials are removed from the storage apparatus, the RFID tag is individually read, and the inventory list is updated by removing the vial information associated with the removed vial from the inventory list.

EP2068268 (A1) relates to a device for filling pharmaceutical containers and a database with an image of a coincidence structure for a material in a pharmaceutical container.

US2004/027180 (A1) relates to a semiconductor device for radio frequency identification (RFID) and to a reader for reading information stored in the semiconductor device, and, more particularly, to a technique effectively applied to: a flip-flop circuit in the device; a structure of a reader portion located close to the semiconductor device

US2005/247399 (A1) relates to an apparatus for applying a programmable transponder to a target includes an applicator disposed adjacent to a tagging zone into which the target is conveyed and a feed-system for transporting a label to the applicator, each of the labels having a programmable transponde.

This technique, however, is labor intensive and time consuming since a manual RFID reading step is required each time an individual vial is added or removed from the storage device. Failure by the operator to perform this RFID reading step can cause errors in the inventory list for the storage device. Further, by manually and repeatedly performing the scan and update steps, the inventory operation can be prone to human errors such as miscommunications, misuses, overscanning, underscanning, omitting steps, and other problems which, in turn, can be the cause of, for example, significant inventory control errors, inventory logistical planning difficulties, loss of samples or vials, missing chain of custody data, and inventory restocking delays.

It would be desirable to have a device that substantially automates the inventory tracking process and overcomes one or more of the problems discussed above.

### BRIEF SUMMARY

The present invention is defined by the attached claims.

### BRIEF DESCRIPTION OF THE DRAWINGS

FIG. 1 illustrates an embodiment of an RFID system according to the present disclosure.
FIG. 2 is a schematic view of an embodiment of an RFID device shown in FIG. 1.
FIG. 3 is a cross sectional view of the RFID device along the line a-a' of FIG. 2 in accordance with an embodiment of the present disclosure.
FIG. 4 is a flow diagram illustrating a method of encoding a vial and linking the vial to a database according to an embodiment of the present disclosure.

### DETAILED DESCRIPTION

The following description is provided as illustrative of the principles of the present disclosure and not in limitation thereof.

Reference will now be made in detail to the present preferred embodiment(s), examples of which are illustrated in the accompanying drawings. The use of a particular reference character in the respective views indicates the same or like parts.

As noted above, broadly, this disclosure teaches a system and a method that provide RFID techniques. The system enables vial level tracking (VLT). The system can automatically apply RFID tags to existing vials and encode the tag with relevant information. This can allow standard vials to be used in the VLT system that do not have a tag pre-applied. In one embodiment, an RFID device can be used to link a specific vial sample to a database record. The system according to one embodiment can provide one or more of the following functions such as, for example: RFID tag application, vial labelling, and data encoding. The functions can work independently of each other.

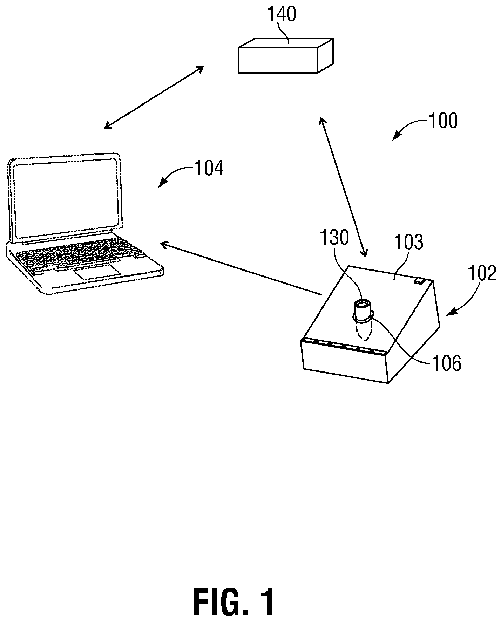

As shown in FIG. 1, an RFID system 100 can include an RFID device 102 and a host computer 104. The RFID device 102 can include a housing 103 with a receptacle 106. The receptacle 106 can be designed (e.g., configured) to receive one or more vials 130. In FIG. 1, the vial 130 can be other types of containers, such as flasks. The RFID device 102 can associate the vial 130 with an identifier. The RFID device 102 can communicate the identifier of the vial 130 to the host computer 104. The communication can be wireless, wired, or some combination thereof. The host computer 104 can associate the vial 130 and/or its identifier with a database 140. The database 140 can be part of or attached to the host computer 104 or can be remotely located relative to the host computer 104. For example, the database 140 can be communicatively coupled to the host computer 104 through one or more networks (e.g., cellular networks, communication networks, local area networks, the Internet, Ethernet, etc.). In some embodiments, the database 140 can be a part of a remote server, a storage cloud, a storage area network (SAN), etc. In some embodiments, the database 140 can be a "cloud" on its own. In some embodiments, the database 140 can be a database abstracted away into application programming interface (API) calls (e.g., in a cloud RFID platform such as Jetstream® Cloud RFID Platform).

Serialized tracking information, which is available through the use of RFID technology, can be stored and organized within a database in accordance with a logical data model. The logical data model can include, for example, a plurality of entities and relationships defining the manner in which serialized vial tracking information is stored and organized within the database. In some embodiments, the vial 130 can be identified along with the contents inside the vial and can be identified with respect to other vials such as having the same contents, coming from the same lot, and/or being in the same box or kit.

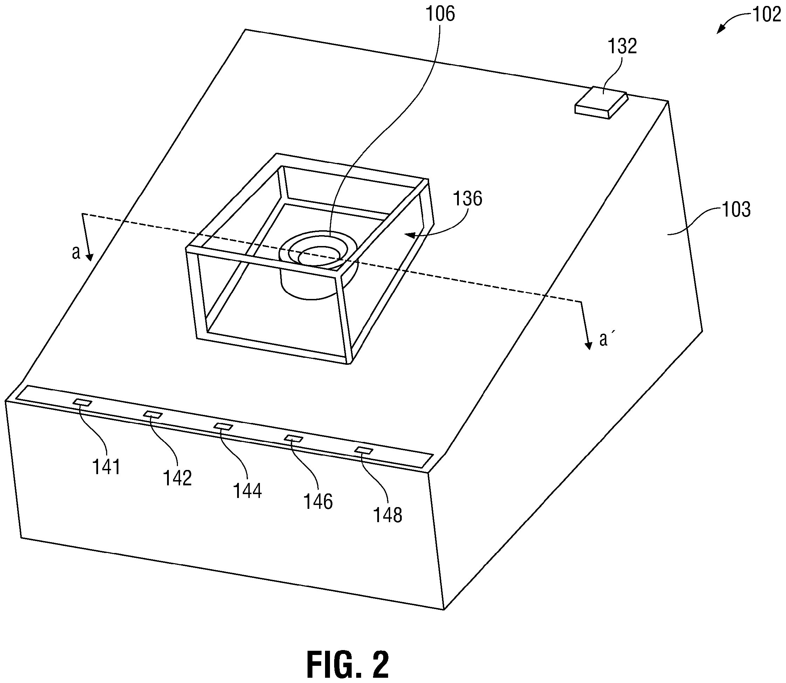

As shown in FIG. 2, the RFID device 102 can include a cover 136 configured to enclose the receptacle 106 of the RFID device 102. The cover 136 can be connected to the housing 103 of the receptacle 106 via a hinge (not shown). The RFID device 102 can further include an input device. The input device can be a push button 132, for example. Some embodiments contemplate that the RFID device 102 have one or more input devices including one or more of the following: one or more buttons, a sensor, the cover 136, a graphical user interface, a touch-sensitive screen, a voice recognition system, a wireless input device, a remote controller, a keypad, and a keyboard. Other embodiments can be used without any of the listed input devices or without additional input devices.

The receptacle 106 of the RFID device 102 can be configured to accommodate a plurality of the vials 130. In some embodiments, the receptacle 106 can be configured to accommodate more or less than 16 vials, for example. In some embodiments, the vial 130 can have an existing RFID tag. In some embodiments, the RFID device 102 can apply RFID tags to the vials. In some embodiments, the vials can be flasks or other types of containers.

The RFID device 102 can further include a plurality of indicators such as indicators 141, 142, 144, 146, 148. The indicator 141 can indicate, for example, whether the power of the RFID device 102 is on. When the power is on, the indicator 141 can provide a green light, for example. The RFID device 102 can have other output devices or indicators including, for example, one or more of the following: a display, a touch-sensitive display, an audio output, a communication device, a communication interface, a printer, etc. The RFID device can be connected to the host computer 104 via, for example, USB, FireWire, Ethernet, serial connections, WiFi, Bluetooth, IEEE 802.11, ZigBee, wireless, wired, or a persistent connection or link on which to relay data to a server-hosted application.

The RFID device 102 can further include a cooling and/or heating element to keep the sample cool/warm while in the apparatus. The cooling and/or heating element may take on many forms in practice such as circulating cold or hot fluid (e.g., water) around the sample.

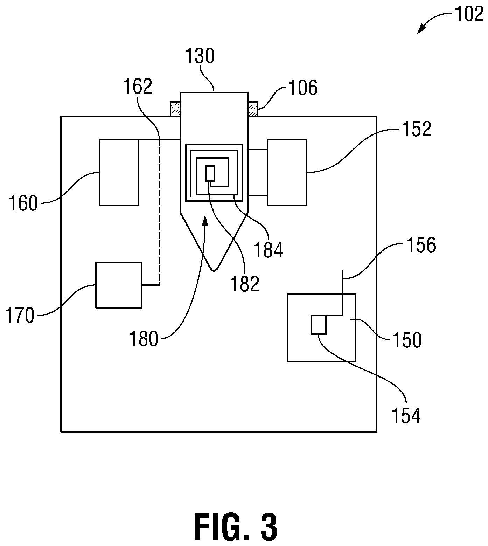

As shown in FIG. 3, the RFID device 102 can include an RFID reader 150. In some embodiments, the RFID reader 150 can include one or more antennas 156. In some embodiments, the RFID reader 150 can include, for example, an integrated circuit chip 154 in addition to the antenna 156. The RFID device 102can include an applicator 160, which can be configured to automatedly label the vial 130 by applying an RFID tag to the vial. The RFID tag 180 can have one or more antennas 184 and/or a chip 182. The chip 182 can each include a respective processor and/or a respective memory (e.g., non-transitory memory) according to some embodiments. The processor can execute instructions or code that is stored in the processor or in the memory to perform one or more of the functions described in the present disclosure. The antenna 156 of the RFID reader 150 can be configured to communicate with the RFID tag 180 and the host computer 104 (as shown in FIG. 1).

The applicator 160 can include an arm 162. The RFID device 102 can further include a spool that includes the RFID tags, an access port configured for manually or automatically feeding the RFID tags, or a cartridge 152 that can include a plurality of RFID tags or a storage device that includes the RFID tags. A storage device may be structured to prevent the RFID tags from being read. An actuator 170, such as a motor, of the RFID device 102 can be configured to communicate with the applicator 160, for example, the arm 162 of the applicator 160, to apply the RFID tag from the cartridge 152 to the vial 130, thereby labelling the vial 130 with the RFID tag 180. In some embodiments, a heat shrink style tag can be used (thus a heat shrink label cartridge can be employed). In some embodiments, a metal mountable tag can be used also. The RFID device 102 can also include a foot (not shown) inside the housing 103 that pushes up the vial 130 out of the receptacle 106 to allow a user to pull the vial 130 out easily once the RFID labelling process is complete.

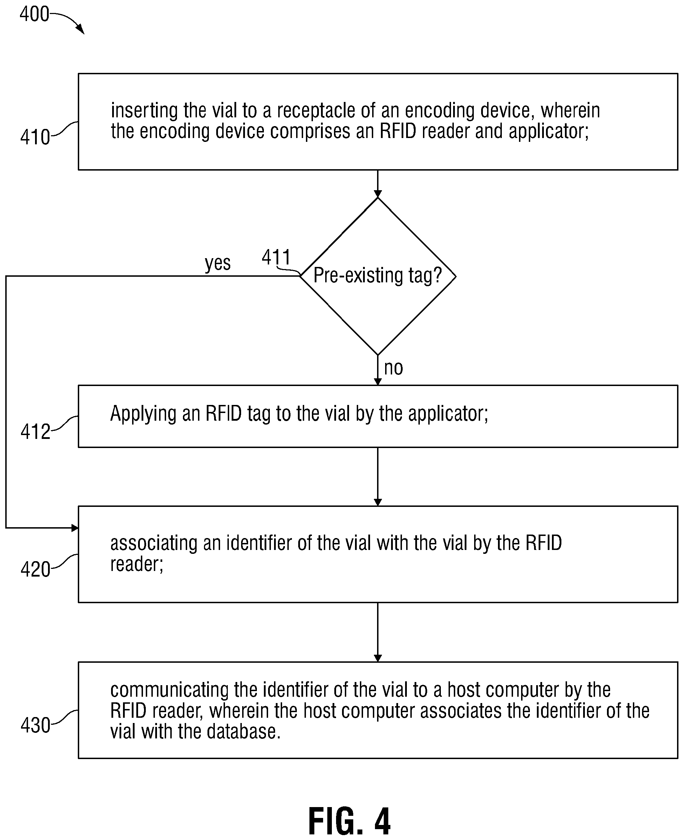

FIG. 4 shows an embodiment of a method 400 that can be designed to encode a vial 130 and to link the vial to a database according to the present disclosure. Instep 410, one or more vials 130 are inserted into a receptacle 106 of an RFID device 102. The indicator 142 (shown in FIG. 2) can indicate whether the vial 130 has been correctly inserted inside the receptacle 106. If the vial 130 is inserted into the receptacle 106 correctly, the indicator 142 can indicate this by a green light, for example. In query 411, the RFID device 102 determines, automatically or manually, whether the vial 130 has a pre-existing tag or if the RFID tag is already embedded in the casing of the vial 130. If the vial does have a pre-existing tag, then the process jumps to step 420. If the vial 130 does not have a pre-existing tag, then the process jumps to step 412 in which the applicator 160 of the RFID device 102 applies an RFID tag 180 onto the vial 130. In some embodiments, a user can press a button 132 (e.g., a push button) to trigger the RFID tag application. In some embodiments, the cover 136 can provide an input signal.

For example, by closing the cover 136, the RFID tag application can be triggered. The indicator 142 can display application status such as, for example, the percentage of the RFID tag application that has been completed. The indicator 142 can also provide a green light when the RFID tag 180 has been successfully applied. In step 412, the RFID reader 150 of the RFID device 102 reads the identifier encoded in the RFID tag 180 that has been applied to the vial 130. In some embodiments, the RFID reader 150 can have an antenna and/or a wireless transceiver that can transmit or receive radio frequency signals. In step 420, the RFID device 102 or the RFID reader 150 can associate the identifier of the vial 130 with the vial 130 or the contents of the vial 130. In some embodiments, this step can include information, input by the user, about the vial or its contents, and the RFID device 102 or the RFID reader 150 associating the vial 130 including the information with the identifier. The information can also be automatically provided for association. The information and/or the identifier can be stored on the RFID tag 180. In step 430, the RFID device 102 or the RFID reader 150 can communicate the associated identifier and vial information to a database (e.g., a relational database) stored and/or maintained at the host computer 104 (e.g., a server). In some embodiments, RFID device 102 can have a printer (not shown) inside the housing 103 so that the RFID device 102 can print user friendly information on the vial. In some embodiments, RFID device 102 can have a QR code reader or barcode reader to parse out existing information. In some embodiments, the host computer 104 makes the association between the associated identifier and the vial information. In some embodiments, the RFID device 102 can transmit the associated identifier and vial information over one or more networks that include one or more wired and/or wireless links.

In some embodiments, the RFID device 102, the RFID reader 150, the RFID tags 180, and/or any other RFID components, subcomponents, systems, and subsystems are compliant with the EPC Radio-Frequency Identity Protocols.

In operation according to some embodiments, the RFID tag 180 can store data on its chip 182. The data can include, for example, one or more of the following: names of specimen contained by the vial, an expiration date, a generation date of specimen, a lot number, a description, and a unique code or identifier.

To scan the RFID tag of the vial 130, the RFID reader 150 or an RFID interrogator (e.g., an RFID transceiver, an RFID transmitter, etc.) transmits data as RF signals that are received by the RFID antenna 184 of the RFID tag 180. The RF signals are received by the RFID tag 180. The energy in the RF signals received by the RFID antenna can be stored and used to power the chip 182 of RFID tag 180. The chip 182 transmits the encoded data over its RFID antenna 184 back to the RFID reader 150. The code can be used to identify, for example, a particular vial and its respective contents contained therein. The indicator 144 can display a reader status. The indicator 144 can display red (or some other color or indication) when the reader is working on extracting the code from the received electromagnetic radiation or if there is an extraction error. The indicator 144 can show a green light (or some other color or indication) when the reader finishes extracting the code or if the code has been successfully extracted.

The indicator 146 can indicate status of encoding data on the vial 130. The indicator 146 can display red (or some other color or indication) when the data are being encoded. The indicator 146 can show a green light (or some other color or indication) when the data have been encoded. The indicator 148 can indicate status of a host connection, such as creating the new entry in the database in the host computer.

In some embodiments, the RFID device 102 can be connected to the host computer 104 via USB, FireWire, Ethernet, or a persistent connection to relay data to a server-hosted application. A connector (not shown) between the host computer 104 and RFID device 102 can be on the top, back, or side of the RFID device 102. Such connections can also be used to power the RFID device 102. Some embodiments provide the RFID device 102 and the host computer 104 communicates over wireless and/or wired connections. The host computer 104 can receive information about the nearby storage apparatus via the cloud or data from a remote server. The host computer 104 can then receive real-time information about each of the vials in the storage apparatus and update its database. The transceiver can be connected to a reader of the storage apparatus into which vials can be placed or stored. The storage apparatus can include, for example, its own processor and a non-transitory memory. Further, the storage apparatus can be connected to the network(s), such as cloud platforms, of the host computer 104, the RFID device 102, and/or the database 140. When a user removes the vial 130 from the RFID device 102 and places inside the storage apparatus (e.g., a cabinet, suitcase, cart, etc.), the transceiver of the storage apparatus can scan the vials. The scan can occur periodically or after a particular condition is met (e.g., the closing of the door of the storage apparatus, a request from a user, etc.).

In some embodiments, the RFID device 102 can be used as a vial array device and accommodate an array of vials 130 by encoding several vials simultaneously or serially. For example, the vials 130 can have pre-existing RFID tags. The RFID reader of the RFID device can be configured to concurrently read more or less than approximately 16 RFID tags, for example, on the vials 130. In one embodiment, the RFID reader 150 can read one RFID tag at a time of the plurality of vials 130 inserted in the RFID device 102 at the same time. In some embodiments, this is facilitated by the RFID reader 150 and/or the RFID tags 180 employing the RF signal, such as at new-field regions.

In some embodiments, a plurality of vials 130 can be logically linked or encoded together as a single entity having the same contents, such as cancer cells from the same host, or belonging to the same lot, in the same box, or a logical container. The RFID reader 150 can be isolated per each vial location, for example, so that only the vial tag placed in each location can be reported to the system. This would be accomplished using an antenna array - one per location - with a limited read zone.

## Claims

1. A radio frequency identification, RFID, device (102), comprising:
a housing (103) having a receptacle (106), wherein the receptacle (106) is configured to receive a vial (130);
an RFID reader (150) having at least one antenna (156) configured to communicate with an RFID tag, wherein the RFID reader (150) is configured to communicate with a host computer (104), **characterized in that**:
the RFID device is configured to determine whether the vial (130) has an existing RFID tag; and
the RFID device comprises an applicator (160) configured to apply an RFID tag to the vial (130) if it is determined by the RFID device (102) that the vial (130) does not have an existing RFID tag.

2. The RFID device (102) of claim 1, further comprising an actuator (170) in communication with the applicator (160) to apply the RFID tag to the vial (130).

3. The RFID device (102) of any one of claims 1-2, further comprising a plurality of indicators.

4. The RFID device (102) of any one of claims 1-3, further comprising an input device.

5. The RFID device (102) of claim 4, wherein the input device comprises one or more of the following: one or more buttons, a graphical user interface, a touch-sensitive screen, a voice recognition system, a wireless input device, a remote controller, and a keyboard.

6. The RFID device (102) of any one of claims 1-5, further comprising one or more of the following: a cartridge that includes the RFID tags; a spool that includes the RFID tags; an access port configured for manually feeding the RFID tags or automatically feeding the RFID tags; a storage device that includes the RFID tags; and a heating or cooling element.

7. A radio frequency identification, RFID, system (100), comprising:
the RFID device of any of claims 1 to 6, wherein the RFID device (102) is configured to associate the vial (130) with an identifier; and
a host computer (104) operatively coupled to the RFID device (102), wherein the RFID device (102) is configured to communicate the identifier of the vial (130) to the host computer (104), and wherein the host computer (104) is configured to associate the identifier with a database (140).

8. The RFID system (100) of claim 7 further comprises an RFID tag (150), wherein the RFID tag has a first chip and a first antenna.

9. The RFID system (100) of claim 8, wherein the first chip (154) stores data that are readable by a reader (150).

10. The RFID system (100) of any one of claims 7-9, wherein the RFID tag (150) is configured to store a unique code or identifier.

11. The RFID system (100) of any one of claims 7-10, wherein the RFID device (102) has a QR code reader or barcode reader to parse out existing information about the vial (130) or its contents.

12. The RFID system (100) of any one of claims 7-11, wherein the RFID reader (150) of the RFID device (102) is configured to read the identifier encoded in the RFID tag (180) that has been applied to the vial (130).

13. A method of using a radio frequency identification, RFID, device (102), the method comprising:
receiving a vial (130) using a receptacle of a housing of the RFID device (102);
communicating communicating with a host computer (104);
**characterized by**:
determining, using at least one antenna (156) of an RFID reader (150), whether the vial (130) has an existing RFID tag; and
applying an RFID tag to the vial (130) with an applicator (160) of the RFID device (102) if it is determined that the vial does not have an existing RFID tag.

## Patentansprüche

1. Radiofrequenzidentifizierungs(RFID)-Vorrichtung (102), die Folgendes umfasst:
ein Gehäuse (103), das einen Behälter (106) aufweist, wobei der Behälter (106) konfiguriert ist, um ein Fläschchen (130) aufzunehmen;
einen RFID-Leser (150), der wenigstens eine Antenne (156) aufweist, die konfiguriert ist, um mit einem RFID-Tag zu kommunizieren, wobei der RFID-Leser (150) konfiguriert ist, um mit einem Host-Computer (104) zu kommunizieren, **dadurch gekennzeichnet, dass**:
die RFID-Vorrichtung konfiguriert ist, um zu bestimmen, ob das Fläschchen (130) ein vorhandenes RFID-Tag aufweist; und
die RFID-Vorrichtung einen Applikator (160) umfasst, der konfiguriert ist, um ein RFID-Tag auf dem Fläschchen (130) zu applizieren, falls durch die RFID-Vorrichtung (102) bestimmt wird, dass das Fläschchen (130) kein vorhandenes RFID-Tag aufweist.

2. RFID-Vorrichtung (102) nach Anspruch 1, die ferner einen Aktuator (170), der mit dem Applikator (160) in Kommunikation steht, um das RFID-Tag auf dem Fläschchen (130) zu applizieren, umfasst.

3. RFID-Vorrichtung (102) nach einem der Ansprüche 1-2, die ferner mehrere Anzeiger umfasst.

4. RFID-Vorrichtung (102) nach einem der Ansprüche 1-3, die ferner eine Eingabevorrichtung umfasst.

5. RFID-Vorrichtung (102) nach Anspruch 4, wobei die Eingabevorrichtung Folgendes umfasst:
eine oder mehrere Knöpfe, eine grafische Benutzeroberfläche, einen Touchscreen, ein Spracherkennungssystem, eine drahtlose Eingabevorrichtung, eine Fernbedienung und/oder eine Tastatur.

6. RFID-Vorrichtung (102) nach einem der Ansprüche 1-5, die ferner Folgendes umfasst:
ein Magazin, das die RFID-Tags beinhaltet; eine Spule, die die RFID-Tags beinhaltet;
eine Zugangsöffnung, die zum manuellen Zuführen der RFID-Tags oder zum automatischen Zuführen der RFID-Tags konfiguriert ist; eine Speichervorrichtung, die die RFID-Tags beinhaltet; und/oder ein Heiz- oder Kühlelement.

7. Radiofrequenzidentifizierungs(RFID)-System (100), das Folgendes umfasst:
die RFID-Vorrichtung nach einem der Ansprüche 1 bis 6, wobei die RFID-Vorrichtung (102) konfiguriert ist, um das Fläschchen (130) einem Bezeichner zuzuordnen; und
einen Host-Computer (104), der mit der RFID-Vorrichtung (102) wirkgekoppelt ist, wobei die RFID-Vorrichtung (102) konfiguriert ist, um den Bezeichner des Fläschchens (130) an den Host-Computer (104) zu kommunizieren, und wobei der Host-Computer (104) konfiguriert ist, um den Bezeichner einer Datenbank (140) zuzuordnen.

8. RFID-System (100) nach Anspruch 7, das ferner ein RFID-Tag (150) umfasst, wobei das RFID-Tag einen ersten Chip und eine erste Antenne aufweist.

9. RFID-System (100) nach Anspruch 8, wobei der erste Chip (154) Daten speichert, die durch einen Leser (150) lesbar sind.

10. RFID-System (100) nach einem der Ansprüche 7-9, wobei das RFID-Tag (150) konfiguriert ist, um einen eindeutigen Code oder Bezeichner zu speichern.

11. RFID-System (100) nach einem der Ansprüche 7-10, wobei die RFID-Vorrichtung (102) einen QR-Codeleser oder einen Strichcodeleser aufweist, um vorhandene Informationen über das Fläschchen (130) oder seinen Inhalt auszuparsen.

12. RFID-System (100) nach einem der Ansprüche 7-11, wobei der RFID-Leser (150) der RFID-Vorrichtung (102) konfiguriert ist, um den Bezeichner zu lesen, der in dem RFID-Tag (180) codiert ist, das auf dem Fläschchen (130) appliziert wurde.

13. Verfahren zum Verwenden einer Radiofrequenzidentifizierungs(RFID)-Vorrichtung (102), wobei das Verfahren Folgendes umfasst:
Empfangen eines Fläschchens (130) unter Verwendung eines Behälters eines Gehäuses der RFID-Vorrichtung (102);
Kommunizieren mit einem Host-Computer (104);
durch Folgendes gekennzeichnet:
Bestimmen, unter Verwendung wenigstens einer Antenne (156) eines RFID-Lesers (150), ob das Fläschchen (130) ein vorhandenes RFID-Tag aufweist; und
Applizieren eines RFID-Tags auf dem Fläschchen (130) mit einem Applikator (160) der RFID-Vorrichtung (102), falls bestimmt wird, dass das Fläschchen kein vorhandenes RFID-Tag aufweist.

## Revendications

1. Dispositif d'identification par radiofréquence, RFID, (102), comprenant :
un boîtier (103) ayant un réceptacle (106), le réceptacle (106) étant conçu pour recevoir un flacon (130) ;
un lecteur RFID (150) ayant au moins une antenne (156) configurée pour communiquer avec une étiquette RFID, le lecteur RFID (150) étant configuré pour communiquer avec un ordinateur hôte (104), **caractérisé en ce que** :
le dispositif RFID est configuré pour déterminer si le flacon (130) a une étiquette RFID existante ; et
le dispositif RFID comprend un applicateur (160) conçu pour appliquer une étiquette RFID au flacon (130) s'il est déterminé par le dispositif RFID (102) que le flacon (130) n'a pas d'étiquette RFID existante.

2. Dispositif RFID (102) selon la revendication 1, comprenant en outre un actionneur (170) en communication avec l'applicateur (160) pour appliquer l'étiquette RFID sur le flacon (130) .

3. Dispositif RFID (102) selon l'une quelconque des revendications 1 à 2, comprenant en outre une pluralité d'indicateurs.

4. Dispositif RFID (102) selon l'une quelconque des revendications 1 à 3, comprenant en outre un dispositif d'entrée.

5. Dispositif RFID (102) selon la revendication 4, le dispositif d'entrée comprenant : un ou plusieurs boutons, et/ou une interface utilisateur graphique, et/ou un écran tactile, et/ou un système de reconnaissance vocale, et/ou un dispositif d'entrée sans fil, et/ou un dispositif de commande à distance, et/ou un clavier.

6. Dispositif RFID (102) selon l'une quelconque des revendications 1 à 5, comprenant en outre : une cartouche qui comporte les étiquettes RFID ; et/ou une bobine qui comporte les étiquettes RFID ; et/ou un port d'accès configuré pour alimenter manuellement les étiquettes RFID ou alimenter automatiquement les étiquettes RFID ; et/ou un dispositif de stockage qui comporte les étiquettes RFID ; et/ou un élément chauffant ou refroidissant.

7. Système d'identification par radiofréquence, RFID, (100), comprenant :
le dispositif RFID selon l'une quelconque des revendications 1 à 6, le dispositif RFID (102) étant configuré pour associer le flacon (130) à un identifiant ; et
un ordinateur hôte (104) couplé fonctionnellement au dispositif RFID (102), le dispositif RFID (102) étant configuré pour communiquer l'identifiant du flacon (130) à l'ordinateur hôte (104), et l'ordinateur hôte (104) étant configuré pour associer l'identifiant à une base de données (140).

8. Système RFID (100) selon la revendication 7, comprenant en outre une étiquette RFID (150), l'étiquette RFID ayant une première puce et une première antenne.

9. Système RFID (100) selon la revendication 8, la première puce (154) stockant des données qui sont lisibles par un lecteur (150).

10. Système RFID (100) selon l'une quelconque des revendications 7 à 9, l'étiquette RFID (150) étant configurée pour stocker un code ou un identifiant unique.

11. Système RFID (100) selon l'une quelconque des revendications 7 à 10, le dispositif RFID (102) ayant un lecteur de code QR ou un lecteur de code à barres pour analyser des informations existantes concernant le flacon (130) ou son contenu.

12. Système RFID (100) selon l'une quelconque des revendications 7 à 11, le lecteur RFID (150) du dispositif RFID (102) étant configuré pour lire l'identifiant codé dans l'étiquette RFID (180) qui a été appliquée au flacon (130).

13. Procédé d'utilisation d'un dispositif d'identification par radiofréquence, RFID, (102), le procédé comprenant :
la réception d'un flacon (130) à l'aide d'un réceptacle d'un boîtier du dispositif RFID (102) ;
la communication avec un ordinateur hôte (104) ;
**caractérisé par** :
la détermination, à l'aide d'au moins une antenne (156) d'un lecteur RFID (150), du fait de savoir si le flacon (130) a une étiquette RFID existante ; et
l'application d'une étiquette RFID au flacon (130) à l'aide d'un applicateur (160) du dispositif RFID (102) s'il est déterminé que le flacon n'a pas d'étiquette RFID existante.
